# EUROPEAN PATENT APPLICATION

(11) **EP 3 550 345 A1**
(43) Date of publication of application: **09.10.2019**
(21) Application number: 19166760.9
(22) Date of filing: 02.04.2019
(51) Int. Cl.: G02B 6/42

(54) **OPTICAL CONNECTOR**

(30) Priority: 05.04.2018 JP 2018073413
(71) Applicant: YAZAKI CORPORATION, Minato-ku, Tokyo 108-8333 (JP)
(72) Inventor: HIKOSAKA, Tomohiro, Shizuoka (JP)
(74) Representative: Hoffmann Eitle

(57) **Abstract**

An optical connector includes a housing including an accommodating portion, a lens body including a lens portion and assembled to the accommodating portion, and an optical conversion module. The optical conversion module includes a light element disposed at a position facing the lens portion when combining the optical conversion module with the lens body, and is assembled to the accommodating portion together with the lens portion.

## Description

### BACKGROUND OF THE INVENTION

### <Field of the Invention>

The present invention relates to an optical connector.

### <Description of Related Art>

There has been known an optical connector used in the field of optical communication that includes a housing, a shield case, a transmission/reception integrated lens, a light emitting side fiber optic transceiver (FOT), and a light receiving side FOT (for example, see Patent Document 1: JP-A-2014-222256).

[Patent Document 1] JP-A-2014-222256

According to a related art, in an optical connector, since a distance between the lens and an optical conversion module such as a light emitting side FOT and a light receiving side FOT is shorter than a distance between lens and a ferrule in a housing, optical transmission is greatly influenced by looseness or positional displacement occurring between an optical conversion module and the lens particularly. Therefore, it is required to position the optical conversion module and the lens with high accuracy without looseness.

### SUMMARY

One or more embodiments provide an optical connector excellent in optical transmission in which an optical conversion module and a lens are positioned with high accuracy without looseness.

In an aspect (1), one or more embodiments provide an optical connector comprising a housing including an accommodating portion, a lens body including a lens portion and assembled to the accommodating portion, and an optical conversion module. The optical conversion module includes a light element disposed at a position facing the lens portion when combining the optical conversion module with the lens body, and is assembled to the accommodating portion together with the lens body. Three or more ribs are formed at equal intervals in a peripheral direction on an inner peripheral surface of the positioning hole or an outer peripheral surface of the positioning protrusion.

In an aspect (2), the lens body includes a light emitting side lens portion and a light receiving side lens portion as the lens portion. The optical conversion module includes a light emitting element and a light receiving element as the light element.

In an aspect (3), the positioning protrusion has a tapered portion which gradually narrows from a vicinity of a front end of the tapered portion toward the front end. The tapered portion is a guide to the positioning hole.

According to the aspect (1), when the lens body and the optical conversion module are combined and the positioning protrusion is fitted into the positioning hole, three or more ribs formed at equal intervals in the peripheral direction on the inner peripheral surface of the positioning hole or the outer peripheral surface of the positioning protrusion come into contact with the outer peripheral surface of the positioning protrusion or the inner peripheral surface of the positioning hole. Accordingly, the lens body and the optical conversion module, which require high positioning accuracy particularly, can be positioned with high accuracy without looseness, optical loss between the lens portion and the optical conversion module can be suppressed, and a high performance optical connector excellent in optical transmission can be provided.

According to the aspect (2), the light emitting side lens portion, the light emitting element, and the light receiving side lens portion, the light receiving element can be positioned with high accuracy in a well-balanced manner due to the positioning mechanism provided between the light emitting side lens portion, the light emitting element, and the light receiving side lens portion, the light receiving element.

According to the aspect (3), the positioning accuracy between the lens body and the optical conversion module can be further improved by the plurality of positioning mechanisms. Further, it is possible to suppress the relative rotational displacement between the lens body and the optical conversion module.

According to one or more embodiments, it is possible to provide an optical connector excellent in optical transmission in which an optical conversion module and a lens are positioned with high accuracy without looseness.

The present invention has been briefly described as above. Further, details of the present invention will be clarified by reading a mode for implementing the present invention to be described below with reference to the accompanying drawings.

### BRIEF DESCRIPTION OF THE DRAWINGS

Fig. 1 is a perspective view of an optical connector according to the present embodiment and a mating side optical connector.
Fig. 2 is a perspective view of the mating side optical connector.
Fig. 3 is an exploded perspective view of the optical connector according to the present embodiment.
Figs. 4A and 4B are views for explaining the optical connector. Fig. 4A is a perspective view of the optical connector as seen from a rear side. Fig. 4B is a perspective view of a housing and a shield case as seen from the rear side.
Figs. 5A and 5B are views for explaining an optical module accommodating portion of the housing. Fig. 5A is a perspective view of an optical conversion module and the housing to which a lens body is attached as seen from the rear side. Fig. 5B is a perspective view of the housing, the lens body and the optical conversion module as seen from the rear side.
Fig. 6 is a perspective view of the lens body and the optical conversion module in an assembled state as seen from the rear side.
Figs. 7A and 7B are views for explaining the lens body and the optical conversion module. Fig. 7A is a perspective view as seen from the rear side. Fig. 7B is a perspective view as seen from a front side.
Figs. 8A and 8B are views for explaining a positioning mechanism for positioning the lens body and the optical conversion module. Fig. 8A is a plan view of a side of the lens body to be attached to the optical conversion module. Fig. 8B is a plan view of a side of the optical conversion module to be attached to the lens body.
Figs. 9A and 9B are views for explaining the positioning mechanism for positioning the lens body and the optical conversion module. Fig. 9A is an enlarged plan view of the side of the lens body to be attached to the optical conversion module. Fig. 9B is an enlarged plan view of the side of the optical conversion module to be attached to the lens body.
Figs. 10A and 10B are views for explaining the positioning mechanism for positioning the lens body and the optical conversion module. Fig. 10A is a sectional view of the lens body and the optical conversion module before combination. Fig. 10B is a sectional view of the lens body and the optical conversion module after combination.
Fig. 11 is a sectional view taken along a line A-A in Fig. 10B.

### DETAILED DESCRIPTION

Hereinafter, an embodiment according to the present invention will be described with reference to the drawings.

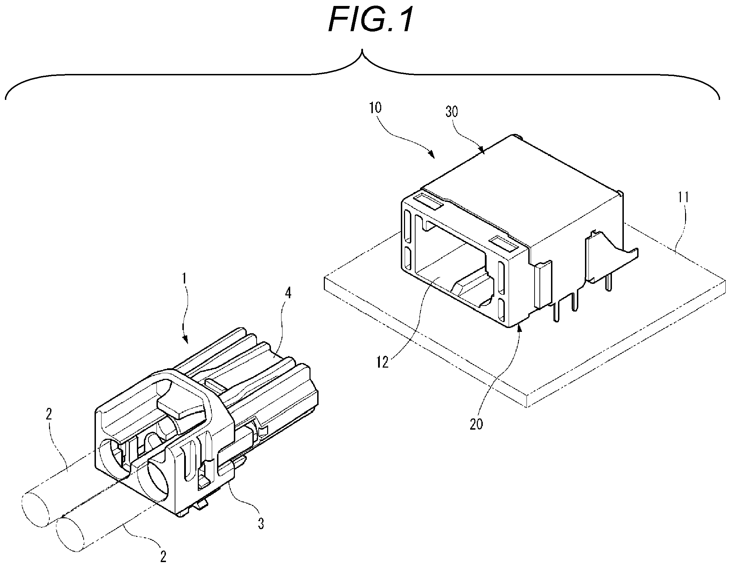

Fig. 1 is a perspective view of an optical connector according to the present embodiment and a mating side optical connector.

As shown in Fig. 1, an optical connector 10 according to the present embodiment is a receptacle optical connector to which a mating side optical connector 1 as a plug connector is fitted. The optical connector 10 is mounted on a circuit board 11, and the mating side optical connector 1 is fitted into a fitting recessed portion 12 in the optical connector 10.

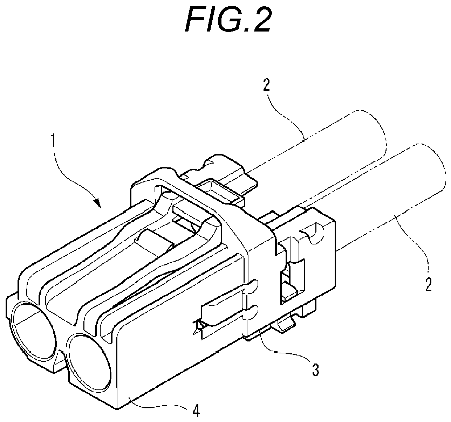

Fig. 2 is a perspective view of the mating side optical connector.

As shown in Fig. 2, the mating side optical connector 1 includes a housing 3 connected to an end portion of an optical fiber 2. A front end of the housing 3 is a fitting portion 4, and the fitting portion 4 is fitted into the fitting recessed portion 12 of the optical connector 10. Accordingly, the optical connector 10 and the optical fiber 2 of the mating side optical connector 1 can be brought into optical communication.

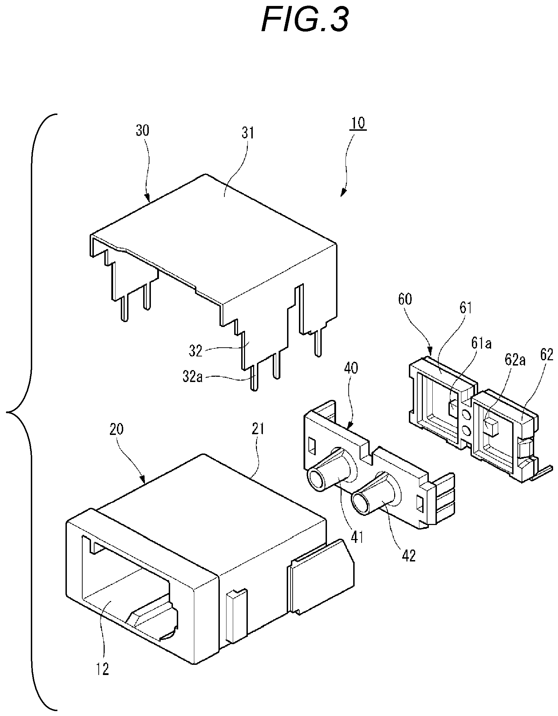

Fig. 3 is an exploded perspective view of the optical connector according to the present embodiment.

As shown in Fig. 3, the optical connector 10 includes a housing 20, a shield case 30, a lens body 40, and a fiber optic transceiver (FOT) 60 that is an optical conversion module.

The housing 20 is a member having a box shape and molded from synthetic resin. The housing 20 is formed with the fitting recessed portion 12 into which the fitting portion 4 of the mating optical connector 1 is fitted on a front end side. The housing 20 is provided with a ferrule (not shown) therein, and the end portion of the optical fiber 2 of the mating side optical connector 1 fitted in the fitting recessed portion 12 is fitted into the ferrule. The housing 20 includes an optical module accommodating portion (accommodating portion) 21 on a rear end side, and the lens body 40 and the FOT 60 are assembled in the optical module accommodating portion 21. In addition, the shield case 30 is fitted with and mounted on the housing 20 from the top. A plurality of protruding portions (not shown) are formed on a lower portion of the housing 20. The protruding portions are fitted into holes formed in the circuit board 11, so that the optical connector 10 is positioned when being mounted on the circuit board 11.

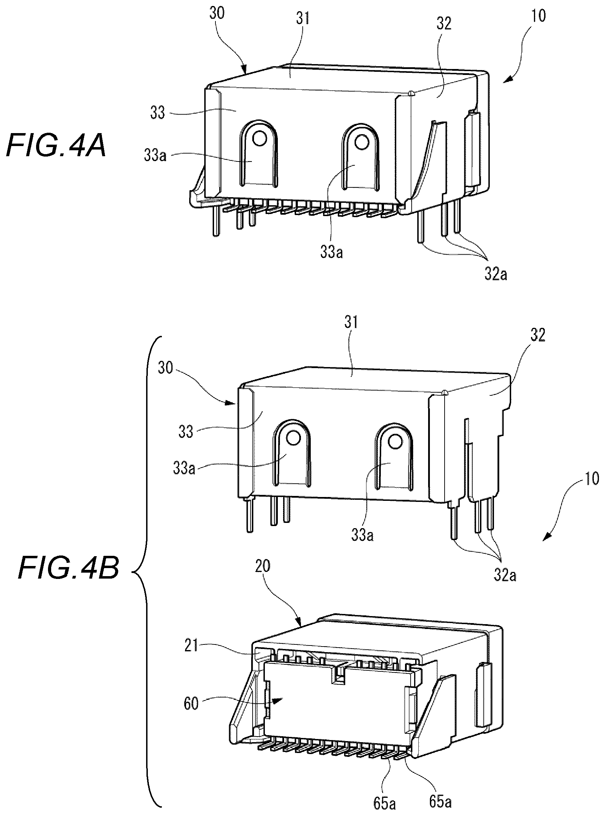

Figs. 4A and 4B are views for explaining the optical connector. Fig. 4A is a perspective view of the optical connector as seen from a rear side. Fig. 4B is a perspective view of the housing and the shield case as seen from the rear side.

As shown in Figs. 4A and 4B, the shield case 30 is formed into a box shape and includes a top plate portion 31, side plate portions 32 formed on both sides of the top plate portion 31, and a rear plate portion 33 formed on a rear side of the top plate portion 31. The shield case 30 is formed into a box shape by pressing a conductive metal plate or the like. The shield case 30 is attached to the housing 20 so as to cover and shield an upper portion, both side portions, and a rear portion of the housing 20. A plurality of leg portions 32a are formed on the side plate portions 32, and the leg portions 32a are inserted and soldered into through holes (not shown) of the circuit board 11. Accordingly, the optical connector 10 is fixed to the circuit board 11. Further, the rear plate portion 33 includes plate spring portions 33a protruding inward. The plate spring portions 33a press a rear surface of the FOT 60 housed in the optical module accommodating portion 21 of the housing 20. Accordingly, the lens body 40 and the FOT 60 housed in the optical module accommodating portion 21 of the housing 20 are maintained in a state of being held in the housing 20 by an urging force of the plate spring portions 33a.

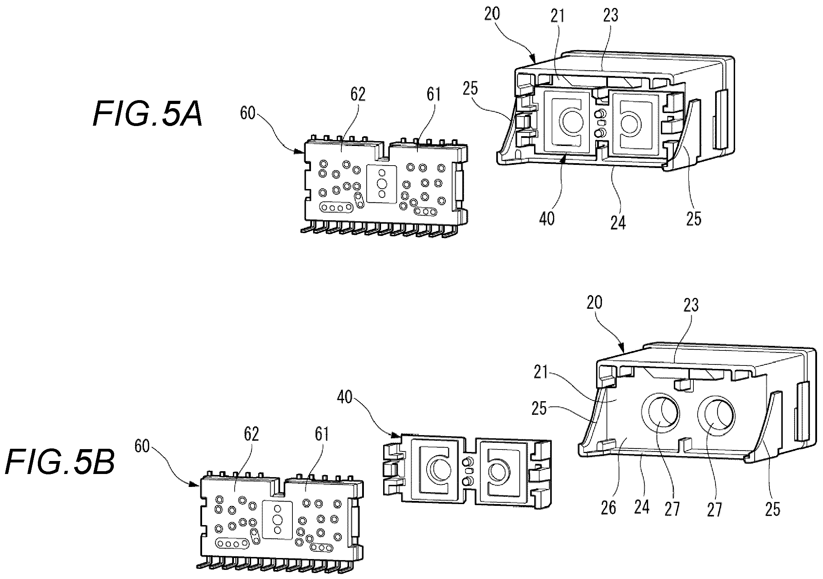

Figs. 5A and 5B are views for explaining the optical module accommodating portion of the housing. Fig. 5A is a perspective view of the optical conversion module and the housing to which the lens body is attached as seen from the rear side. Fig. 5B is a perspective view of the housing, the lens body and the optical conversion module as seen from the rear side.

As shown in Figs. 5A and 5B, the lens body 40 and the FOT 60 are assembled in the optical module accommodating portion 21 on the rear end side of the housing 20. The optical module accommodating portion 21 is formed in a recessed shape into which the lens body 40 and the FOT 60 are fitted. The optical module accommodating portion 21 includes an upper wall portion 23, a bottom wall portion 24, and a pair of side wall portions 25. In addition, a bottom portion of the recessed part of the optical module accommodating portion 21 is a contact surface 26, and two lens insertion holes 27 are formed in the contact surface 26.

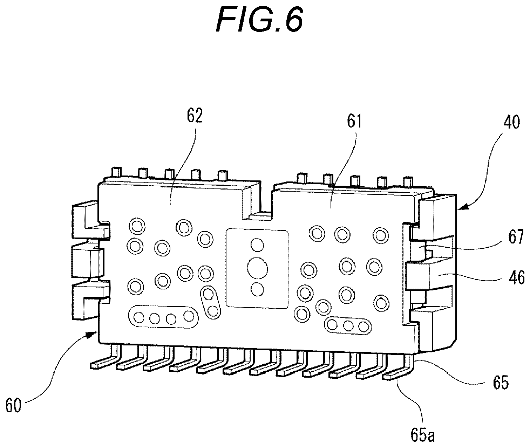

Fig. 6 is a perspective view of the lens body and the optical conversion module in an assembled state as seen from the rear side.

As shown in Fig. 6, the lens body 40 and the FOT 60 are combined with each other so as to be positioned. The lens body 40 and the FOT 60 are assembled to the optical module accommodating portion 21 of the housing 20 in a state of being combined with each other. Thereby, the FOT 60 is positioned with respect to the housing 20.

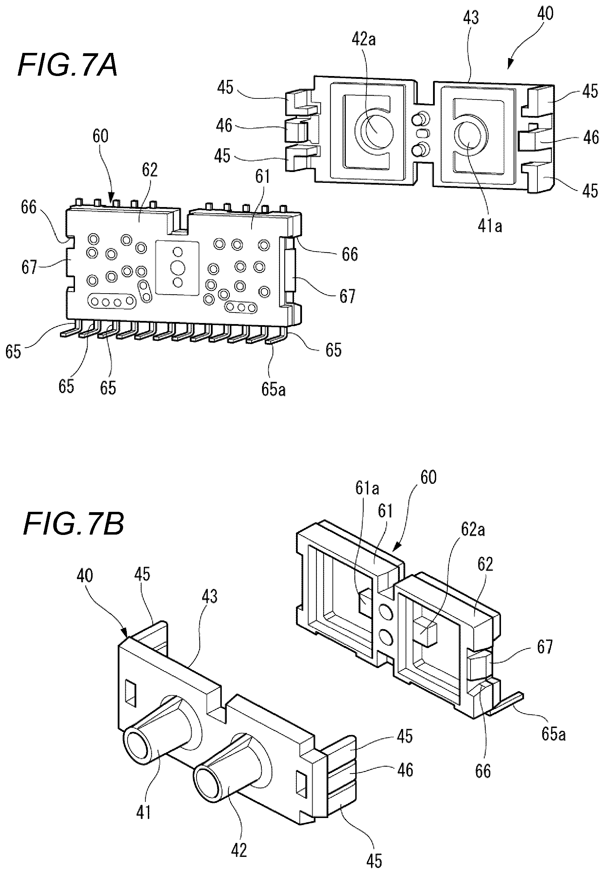

Figs. 7A and 7B are views for explaining the lens body and the optical conversion module. Fig. 7A is a perspective view as seen from the rear side. Fig. 7B is a perspective view as seen from a front side.

As shown in Figs. 7A and 7B, the lens body 40 includes a substrate portion 43 formed in a rectangular shape in the plan view, and a light emitting side lens portion 41 and a light receiving side lens portion 42 are formed on the substrate portion 43. The light emitting side lens portion 41 and the light receiving side lens portion 42 are provided side by side. The lens body 40 is integrally formed of transparent resin having light guiding properties, so that the light emitting side lens portion 41 and the light receiving side lens portion 42 are integrally provided to protrude forward from a front surface of the substrate portion 43. An FOT 60 side of the light emitting side lens portion 41 is an incident surface 41a, and an FOT 60 side of the light receiving side lens portion 42 is an emitting surface 42a. The lens body 40 is formed with engagement protrusions 45 and locking claws 46 on both sides of the substrate portion 43. The engagement protrusions 45 are provided on both sides of the locking claw 46.

The FOT 60 is formed in a rectangular shape in the plan view, and a light emitting side FOT 61 and a light receiving side FOT 62 are provided side by side on a front surface of the FOT 60. The light emitting side FOT 61 includes a light emitting element 61a such as a light emitting diode (LED), a vertical cavity surface emitting laser (VCSEL), for example, and the light receiving side FOT 62 includes a light receiving element 62a such as a photo diode (PD), for example. The FOT 60 is integrally formed of synthetic resin, so that the light emitting side FOT 61 and the light receiving side FOT 62 are integrally provided. A plurality of lead frames 65 are provided at a lower portion of the FOT 60. The lead frame 65 includes a connection portion 65a whose end portion is bent toward the rear side of the FOT 60. The connection portion 65a is disposed and soldered on a pad of the circuit board 11 so as to be electrically connected to a predetermined circuit of the circuit board 11. Recessed portions 66 are formed on both sides of the FOT 60, and a locking piece 67 is provided in the recessed portion 66 and protruding therefrom.

The FOT 60 is assembled to the rear surface side having the incident surface 41a and the emitting surface 42a of the lens body 40. At this time, the engagement protrusions 45 of the lens body 40 are engaged with the recessed portion 66 of the FOT 60, and the locking claw 46 of the lens body 40 is locked with the locking piece 67 of the FOT 60. Accordingly, the FOT 60 is assembled to the lens body 40, and the light emitting element 61a of the light emitting side FOT 61 and the light receiving element 62a of the light receiving side FOT 62 in the FOT 60 are disposed at positions facing the incident surface 41a of the light emitting side lens portion 41 and the emitting surface 42a of the light receiving side lens portion 42 in the lens body 40, respectively.

The assembly of the lens body 40 and the FOT 60 is fitted in the optical module accommodating portion 21 of the housing 20 and housed in a state of being positioned at a predetermined position. As a result, the light emitting side lens portion 41 and the light receiving side lens portion 42 of the lens body 40 are inserted into the lens insertion holes 27 of the housing 20, and a front surface of the lens body 40 is brought into contact with the contact surface 26. Accordingly, the light emitting side lens portion 41 and the light receiving side lens portion 42 of the lens body 40 are housed in the lens insertion holes 27 in a state of being positioned on the ferrule inside the housing 20.

Further, when the shield case 30 is attached to the housing 20, the FOT 60 is pressed by the plate spring portions 33a formed on the rear plate portion 33 of the shield case 30. Therefore, the lens body 40 and the FOT 60 are maintained in a state of being held in the optical module accommodating portion 21 of the housing 20.

In the optical connector 10, an optical signal converted and generated from an electrical signal by the light emitting side FOT 61 of the FOT 60 is incident on the light emitting side lens portion 41 of the lens body 40 from the incident surface 41a and is guided to one optical fiber 2 of the mating side optical connector 1 fitted to the fitting recessed portion 12. In addition, an optical signal incident on the light receiving side lens portion 42 from the other optical fiber 2 of the mating side optical connector 1 is emitted from the emitting surface 42a of the light receiving side lens portion 42 of the lens body 40, received by the light receiving side FOT 62 of the FOT 60, and converted into an electrical signal.

Incidentally, in the optical connector 10, the distance between the light emitting side FOT 61 and the light receiving side FOT 62 of the FOT 60 and the light emitting side lens portion 41 and the light receiving side lens portion 42 of the lens body 40 is shorter than the distance between the ferrule in the housing 20 and the light emitting side lens portion 41 and the light receiving side lens portion 42 of the lens body 40. Therefore, optical transmission is greatly influenced by looseness or positional displacement occurring between the lens body 40 and the FOT 60 particularly.

For this reason, the optical connector 10 according to the present embodiment includes a positioning mechanism that positions the lens body 40 and the FOT 60 with high accuracy without looseness.

Next, the positioning mechanism provided in the optical connector 10 will be described.

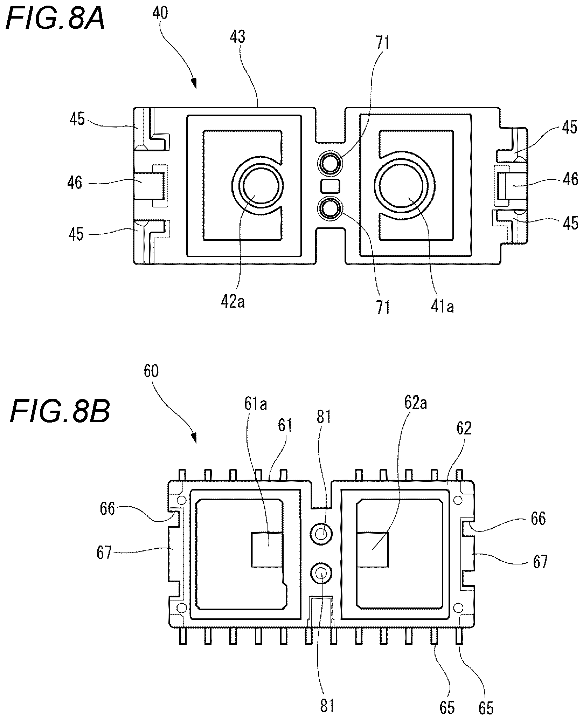

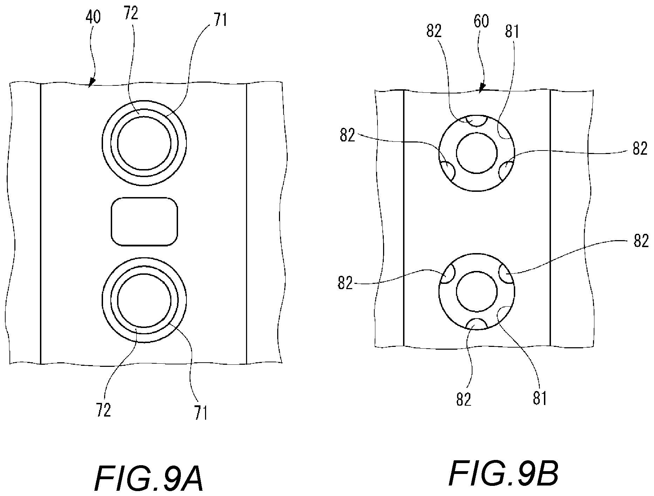

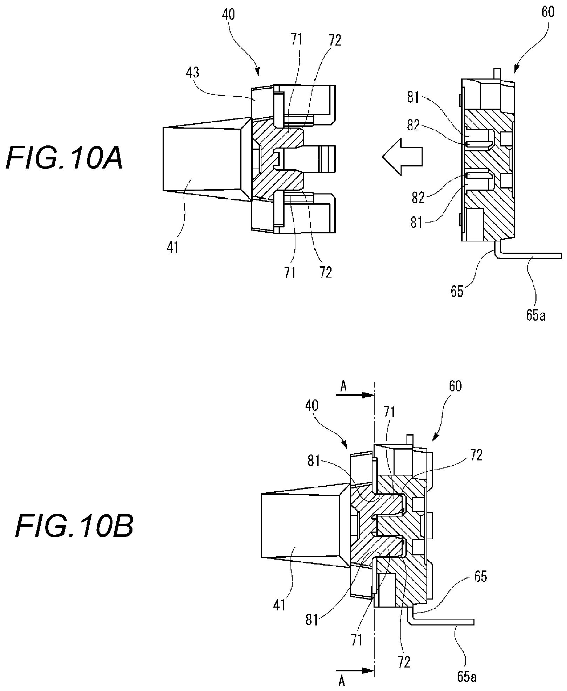

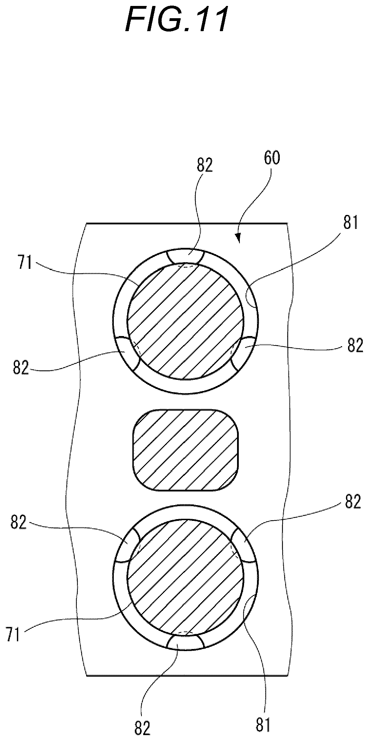

Figs. 8A and 8B are views for explaining the positioning mechanism for positioning the lens body and the photoelectric conversion module. Fig. 8A is a plan view of a side of the lens body to be attached to the photoelectric conversion module. Fig. 8B is a plan view of a side of the photoelectric conversion module to be attached to the lens body. Figs. 9A and 9B are views for explaining the positioning mechanism for positioning the lens body and the photoelectric conversion module. Fig. 9A is an enlarged plan view of the side of the lens body to be attached to the photoelectric conversion module. Fig. 9B is an enlarged plan view of the side of the photoelectric conversion module to be attached to the lens body. Figs. 10A and 10B are views for explaining the positioning mechanism for positioning the lens body and the photoelectric conversion module. Fig. 10A is a sectional view of the lens body and the photoelectric conversion module before combination. Fig. 10B is a sectional view of the lens body and the photoelectric conversion module after combination. Fig. 11 is a sectional view taken along a line A-A in Fig. 10B.

As shown in Figs 8A to 10B, the optical connector 10 includes a positioning mechanism configured by a positioning protrusion 71 formed on the lens body 40 and a positioning hole 81 formed in the FOT 60. The positioning mechanism is provided between the light emitting side lens portion 41, the light emitting element 61a and the light receiving side lens portion 42, the light receiving element 62a.

As shown in Figs 8A, 9A and 10A, the lens body 40 includes two positioning protrusions 71 at a center portion in a width direction. The positioning protrusions 71 are formed on the rear surface side of the lens body 40, which is the side on which the FOT 60 is to be assembled. The positioning protrusions 71 are disposed at intervals in a height direction of the lens body 40. The positioning protrusion 71 includes a tapered portion 72 which gradually narrows from the vicinity of a front end thereof toward the front end thereof.

As shown in Figs 8B, 9B and 10A, the FOT 60 includes two positioning holes 81 at a center portion in a width direction. The positioning holes 81 are formed on the front side of the FOT 60, which is the side on which the lens body 40 is to be assembled. The positioning holes 81 are formed at intervals in a height direction of the FOT 60. The positioning hole 81 includes three ribs 82 on an inner peripheral surface thereof. The ribs 82 are formed along an axial direction of the positioning hole 81 and are disposed at equal intervals in a peripheral direction of the positioning hole 81.

An outer diameter of the positioning protrusion 71 is slightly smaller than an inner diameter of the positioning hole 81 and slightly larger than a diameter of a circle passing through the front ends of these three ribs 82. The FOT 60 including the positioning holes 81 is made softer than the lens body 40 including the positioning protrusions 71.

When the lens body 40 and the FOT 60 including the positioning mechanism configured by the positioning protrusion 71 and the positioning hole 81 are assembled with each other, as shown in Fig. 10B, the positioning protrusion 71 of the lens body 40 is fitted into the positioning hole 81 of the FOT 60. At this time, the positioning protrusion 71 is guided and introduced smoothly to the positioning hole 81 by the tapered portion 72 formed at the front end portion.

Further, when the positioning protrusion 71 of the lens body 40 is inserted into the positioning hole 81 of the FOT 60, as shown in Fig. 11, the ribs 82 formed on the inner peripheral surface of the positioning hole 81 come into contact with the outer peripheral surface of the positioning protrusion 71 and are pushed to spread outward, and are compressively deformed uniformly. As a result, the positioning protrusion 71 and the positioning hole 81 are aligned with each other by the compression-deformed ribs 82 and are fitted without looseness. Therefore, the lens body 40 and the FOT 60 are combined with each other in a state of being positioned with high accuracy without looseness. Accordingly, the light emitting side FOT 61 and the light receiving side FOT 62 of the FOT 60 are positioned with high accuracy with respect to the light emitting side lens portion 41 and the light receiving side lens portion 42 of the lens body 40, thereby enabling good optical transmission.

As described above, according to the optical connector 10 of the present embodiment, when the lens body 40 and the FOT 60 are combined and the positioning protrusion 71 is fitted into the positioning hole 81, three or more ribs 82 formed at equal intervals in the peripheral direction on the inner peripheral surface of the positioning hole 81 come into contact with the outer peripheral surface of the positioning protrusion 71. Accordingly, the lens body 40 and the FOT 60, which require high positioning accuracy particularly, can be positioned with high accuracy without looseness, optical loss between the light emitting side lens portion 41 and the light emitting element 61a, and between the light receiving side lens portion 42 and the light receiving element 62a can be suppressed, and a high performance optical connector 10 excellent in optical transmission can be provided.

Further, the positioning mechanism including the positioning protrusion 71 and the positioning hole 81 is provided between the light emitting side lens portion 41, the light emitting side FOT 61 and the light receiving side lens portion 42, the light receiving side FOT 62. Accordingly, the light emitting side lens portion 41, the light emitting element 61a, and the light receiving side lens portion 42, the light receiving element 62a can be positioned with high accuracy in a well-balanced manner.

In addition, since a plurality of positioning mechanisms each including the positioning protrusion 71 and the positioning hole 81 are provided, the positioning accuracy between the lens body 40 and the FOT 60 can be further improved by the plurality of positioning mechanisms. Further, it is possible to suppress the relative rotational displacement between the lens body 40 and the FOT 60.

Incidentally, the present invention is not limited to the above-described embodiment, but may be appropriately modified, improved or the like. In addition, materials, shapes, dimensions, numerals, disposition locations or the like of each constituent element in the above-described embodiment are optional are not limited as long as the object of the invention can be achieved.

For example, in the above-described embodiment, the positioning protrusion 71 is provided on the lens body 40 and the positioning hole 81 to be fitted with the positioning protrusion 71 is provided in the FOT 60. However, the positioning hole may be provided in the lens body 40, and the positioning protrusion to be fitted into the positioning hole may be provided on the FOT 60.

In the above embodiment, the ribs 82 are formed on the inner peripheral surface of the positioning hole 81, and the ribs may also be formed on the outer peripheral surface of the positioning protrusion 71.

Incidentally, three or more positioning mechanisms including the positioning hole 81 and the positioning protrusion 71 may be provided, and four or more ribs 82 may be provided.

Here, characteristics of the embodiment of the optical connector according to the present invention described above are summarized briefly in the following [1] to [3], respectively.
[1] An optical connector comprising:
   a housing (20) including an accommodating portion (optical module accommodating portion 21);
   a lens body (40) including a lens portion (light emitting side lens portion 41, light receiving side lens portion 42) and assembled to the accommodating portion (optical module accommodating portion 21); and
   an optical conversion module (FOT 60),
   wherein the optical conversion module (FOT 60) includes a light element (light emitting element 61a, light receiving element 62a) disposed at a position facing the lens portion (light emitting side lens portion 41, light receiving side lens portion 42) when combining the optical conversion module with the lens body (40), and is assembled to the accommodating portion (optical module accommodating portion 21) together with the lens body (40),
   wherein the lens body (40) and the optical conversion module (FOT 60) includes a positioning mechanism having a positioning protrusion (71) formed on one of the lens body (40) and the optical conversion module (FOT 60) and a positioning hole (81) formed on the other of the lens body (40) and the optical conversion module (FOT 60), the positioning protrusion (71) and the positioning hole (81) being fitted with each other, and
   wherein three or more ribs (82) are formed at equal intervals in a peripheral direction on an inner peripheral surface of the positioning hole (81) or an outer peripheral surface of the positioning protrusion (71).
[2] The optical connector according to the above-described [1],
   wherein the lens body (40) includes a light emitting side lens portion (41) and a light receiving side lens portion (42) as the lens portion,
   wherein the optical conversion module (60) includes a light emitting element (61a) and a light receiving element (62a) as the light element.
[3] The optical connector according to the above-described [1],
   wherein the positioning protrusion (71) has a tapered portion (72) which gradually narrows from a vicinity of a front end of the tapered portion toward the front end, and
   wherein the tapered portion is a guide to the positioning hole (81).
[4] The optical connector according to the above-described [1] or [2],
   wherein a plurality of the positioning mechanisms are provided.

### [Description of Reference Numerals and Signs]

10 optical connector
20 housing
21 optical module accommodating portion (accommodating portion)
40 lens body
41 light emitting side lens portion (lens portion)
42 light receiving side lens portion (lens portion)
60 FOT (optical conversion module)
61a light emitting element (light element)
62a light receiving element (light element)
71 positioning protrusion (positioning mechanism)
81 positioning hole (positioning mechanism)
82 rib

## Claims

1. An optical connector comprising:
a housing including an accommodating portion;
a lens body including a lens portion and assembled to the accommodating portion; and
an optical conversion module,
wherein the optical conversion module includes a light element disposed at a position facing the lens portion when combining the optical conversion module with the lens body, and is assembled to the accommodating portion together with the lens body,
wherein the lens body and the optical conversion module includes a positioning mechanism having a positioning protrusion formed on one of the lens body and the optical conversion module and a positioning hole formed on the other of the lens body and the optical conversion module, the positioning protrusion and the positioning hole being fitted with each other, and
wherein three or more ribs are formed at equal intervals in a peripheral direction on an inner peripheral surface of the positioning hole or an outer peripheral surface of the positioning protrusion.

2. The optical connector according to claim 1,
wherein the lens body includes a light emitting side lens portion and a light receiving side lens portion as the lens portion,
wherein the optical conversion module includes a light emitting element and a light receiving element as the light element.

3. The optical connector according to claim 1,
wherein the positioning protrusion has a tapered portion which gradually narrows from a vicinity of a front end of the tapered portion toward the front end, and
wherein the tapered portion is a guide to the positioning hole.

4. The optical connector according to claim 1 or 2,
wherein a plurality of the positioning mechanisms are provided.
